# EUROPEAN PATENT SPECIFICATION

(11) **EP 2 274 155 B1**
(45) Date of publication and mention of the grant of the patent: **20.03.2013**
(21) Application number: 09803945.6
(22) Date of filing: 14.05.2009
(51) Int. Cl.: F41H 5/04, B29C 70/46, B32B 37/26

(54) **METHOD TO PRODUCE STAB AND BALLISTIC RESISTANT COMPOSITE STRUCTURES**
VERFAHREN ZUR HERSTELLUNG VON STICH- UND KUGELSICHEREN VERBUNDSTRUKTUREN
PROCÉDÉ POUR PRODUIRE DES STRUCTURES COMPOSITES RÉSISTANT AUX BALLES ET À L'ARME BLANCHE

(30) Priority: 14.05.2008 US 152398
(43) Date of publication of application: 19.01.2011
(73) Proprietor: E. I. du Pont de Nemours and Company, Wilmington, DE 19898 (US)
(72) Inventor: BADER, Yves, F-01710 Thoiry (FR); PONT, Nicolas, F-74160 St Julien en Genevois (FR); ROLLAND, Loic, Pierre, F-01220 Divonne les Bains (FR)
(74) Representative: Heinemann, Monica
(86) International application number: PCT/US2009/043933
(87) International publication number: WO 2010/036406

(56) References cited:
- WO-A2-02/26463
- US-A- 5 677 029
- US-A1- 2006 068 671

## Description

### BACKGROUND OF THE INVENTION

### 1. Field of Invention

The present invention relates to a method for producing fiber composites impregnated with a thermoplastic resin to be used as stab and ballistic composite structures.

### 2. Background of the Invention

It is known to use high tenacity fibers such as poly(p-phenylene terephthalamide) in multilayer structures to provide protection against a wide variety of threats. Articles made of such woven aramid fibers are known to be resistant to knife stabs such as for example picks and to ballistic projectiles.

US 5,677,029 discloses a flexible article of manufacture especially suitable for use as a ballistic resistant body armor which comprises two or more layers, at least one of said layers being a fibrous layer, and at least one of said layers being a polymeric layer in contact with and bound to all or portion of said fibrous layer. Said reference does not foresee to provide a thermoplastic layer and release layer in form of a pre-assembled structure, nor does it teach using a release layer which is not substantially altered in its chemical and physical properties during the thermopressing step.

WO 02/26463 describes a process of concurrently molding multiple laminates at one time, thereby providing an efficient means of mass-producing several molded sheets or parts. The laminates of said reference are formed from a wet-laid material comprising a fiber reinforcement and a particulate thermoplastic material. Said reference does not foresee to provide a thermoplastic layer and release layer in form of a pre-assembled structure.

With the aim of further improving stab and ballistic resistance of protective articles, composite structures based on resins and aramid fabrics have been developed. WO 2001/037691 discloses a protective material comprising a plurality of separate flexible layers, each layer comprising a plurality of high-strength fibers and a support material made of a resin. By being embedded within the resin, the relative movement of the fibers upon an impact caused to the wearer is reduced thus leading to an increased blunt trauma resistance.

Conventional processes used to manufacture such composite materials involve first a lamination step and then a resin sublimation step.

The lamination step comprises the extrusion of the resin into a film, which film is then laminated onto the fabric made of high-strength fibers in order to have a sufficient adhesion between the film and the fabric and to form a composite assembly. This process requires the use of an anti-stick layer which is typically made of silicone paper and which is positioned between the film and the laminating rolls to prevent the so-manufactured composite assembly from sticking to the heated rolls. The use of these anti-stick layers requires manufacturing machines with three or more rolls depending on whether the fabric is impregnated on one side or both sides. This implies more complex tensioning systems and operating procedures and lowers the overall manufacturing speed.

In the resin sublimation step, the composite assembly obtained under the lamination step undergoes heat and pressure in a heating press (thermopressing) in order to allow the resin to sublimate through the fabric matrix and, therefore, to impregnate it. The resin impregnation improves the protective effect of the final composite structure. The sublimation step is typically a batch process where sheets of composite assembly manufactured under the lamination step are pressed together.

In order to increase the production yield under the resin sublimation step, it is known to load the heating press with as many layers as possible of the composite assembly obtained under the lamination step. In such a case it is however essential to interpose an anti-stick layer like that described above between each of two composite assembly layers in order to prevent them from sticking together during thermopressing. The preparation of this multilayer pile is made by a conventional machine which alternatively deposits anti-stick layers and composite assemblies, and possibly cut the borders of the pile to match the size of the heating press. After pressing and cooling the pile, the anti-stick layers between each so impregnated composite structure must be eventually removed.

The use of anti-stick layers during the lamination step and the sublimation step increases the complexity and costs of the overall manufacturing process. Moreover, the anti-stick material described above is expensive and cannot be used for more than a production cycle and it is usually difficult to dispose, particularly if made of silicone paper. An increase of energy consumption associated with the thickness of the silicone paper further strengthens the environmental concerns.

There is therefore a need for a simpler and more efficient process for manufacturing stab and ballistic resistant composite structures like those described above.

### SUMMARY OF INVENTION

It has been found that the above mentioned problems can be overcome by a method of producing a stab and ballistic resistant composite structure according to claim 1:

After resin sublimation and impregnation of the aramid fabric layer under step d, the release layer, which is not substantially altered in its chemical and physical features, can be easily peeled off from the stab and ballistic resistant composite structure thus obtained.

If compared with the conventional manufacturing processes described above, the method according to the present invention enables to prepare stab and ballistic resistant composite structures in a more efficient way and at a lower cost. The two independent lamination and sublimation steps of the conventional processes are merged into a single step by providing the thermoplastic layer and the release layer in form of a pre-assembled structure. This reduces the complexity of the manufacturing machines and of the overall manufacturing process.

By avoiding the use of silicone papers as in the conventional processes described above, products costs and energy consumption are reduced, thus reducing the overall manufacturing costs of the final stab and ballistic resistant composite structure.

### DETAILED DESCRIPTION OF INVENTION

The aramid fabric layer used in the stab and ballistic resistant composite structure according to the present invention is made of yarns which are made of fibers. For purposes herein, the term "fiber" is defined as a relatively flexible, microscopically homogeneous body having a high ratio of length to width across its cross-sectional area perpendicular to its length. The fiber cross section can be any shape, but is typically round. Herein, the term "filament" is used interchangeably with the term "fiber".

By "aramid", it is meant a polyamide wherein at least 85% of the amide (-CONH-) linkages are attached directly to two aromatic rings. Suitable aramid fibers are described in Man-Made Fibers - Science and Technology, Volume 2, Section titled Fiber-Forming Aromatic Polyamides, page 297, W. Black et al., Interscience Publishers, 1968. Aramid fibers and their production are, also, disclosed in U.S. Patents 4,172,938; 3,869,429; 3,819,587; 3,673,143; 3,354,127; and 3,094,511. The preferred aramid is a para-aramid. The preferred para-aramid is poly(p-phenylene terephthalamide) which is called PPD-T.

The multilayer structure used in the method according to the present invention is a pre-assembled structure of the at least one thermoplastic layer and the at least one release layer. The two layers are assembled together by a single process which may include laminating or extrusion coating the thermoplastic resin onto the release layer or co-extrusion of the two layers. When extrusion coating is used, the release layer is prepared by conventional methods such as for example blown film extrusion, cast film extrusion or cast sheet extrusion.

The thermoplastic resin, on which the thermoplastic layer of the multilayer structure used in the method of the present invention is based, can be chosen among a wide variety of resins well known in the art like for example ionomers, polyethylenes, polyesters, polyamides, polyimides, polycarbonates, polyurethanes, polyether etherketones, phenolic-modified resins and mixtures thereof. Preferably, the thermoplastic resin is made of one or more ionomers.

Ionomers are thermoplastic resins that contain metal ions in addition to the organic backbone of the polymer. Ionomers are ionic copolymers of an olefin such as ethylene with partially neutralized α,β-unsaturated C₃-C₈ carboxylic acid. Preferably, the acid copolymer is acrylic acid (AA) or methacrylic acid (MAA). Preferred neutralizing agents are sodium, potassium, zinc, magnesium, lithium and combinations thereof. The acid groups of the ionomers used in the present invention are neutralized from 1.0 to 99.9% and preferably from 20 to 75%. Ionomers optionally can comprise at least one softening comonomer that is co-polymerizable with ethylene. Ionomers and their methods of manufacture are described in US Patent No. 3,264,272. Suitable ionomers for use in the present invention are commercially available under the trademark Surlyn^{®} from E. I. du Pont de Nemours and Company, Wilmington, Delaware, USA.

The thickness of the at least one thermoplastic layer may be chosen depending on the end-use application by varying the degree of flexibility and the stab and/or ballistic resistance. The optimal thickness of the thermoplastic layer depends on the number and thickness of aramid fabrics that must be impregnated with the thermoplastic resin. If only one side of the aramid fabric layer(s) has to be impregnated, then the thickness of the at least one thermoplastic layer is preferably from 10 to 200 µm. If both sides of the aramid fabric layer(s) have to be impregnated, then the thickness of each at least one thermoplastic layer should preferably be from 20 to 150 µm and more preferably from 25 to 100 µm. A primary reason for this preferred difference in thickness of the at least one thermoplastic layer is that sufficient thermoplastic resin should be available for proper impregnation of the aramid fabric layer in order to form an interpenetrating network of fibers substantially surrounded by the thermoplastic resin. In the resulting stab and ballistic resistant composite structure, the at least one thermoplastic layer has sublimated into the aramid fabric layer and is no longer present in the form of a distinct layer, but rather as a thermoplastic resin continuum surrounding the aramid fabric layer.

The at least one release layer has a melting temperature which is substantially higher than that of the thermoplastic layer in order for the release layer to remain physically and chemically intact during the sublimation process and to be eventually easily peeled off from the impregnated aramid fabric layer. Preferably the melting temperature of the release layer is at least 50°C, higher than the melting temperature of the thermoplastic layer.

Examples of polymers suitable for use as the release layer include polyesters, polypropylenes, polyethylenes, polyvinyl chlorides, polystyrenes and mixtures thereof. Preferably, the material used in the release layer is a polyester such as for example polyethylene terephthalate (PET), polypropylene terephthalate (PPT), polybutylene terephthalate (PBT), polycyclohexylene dimethylene terephatalate (PCT), or polynaphthalene terephthalate (PEN), polyethylene terephthalate (PET) being preferred.

The at least one release layer may further comprise various additives such as for examples slip additives, anti-bloc additives, pigments or colorants, inorganic fillers such as calcium carbonate or talcum and foaming agents. With the aim of rendering the release layer visible, it may comprise pigments or colorants.

The thickness of the at least one release layer will depend on the thickness of the thermoplastic layer. The release layer must be thick enough so that it is capable of being peeled off from the thermoplastic layer and so that it is not mechanically damaged during the sublimating process. Typically, the release layer has a thickness in the range of about 1 to about 50 µm and preferably in the range of about 5 to about 30 µm.

The pile undergoes heat and pressure (thermopressing), typically by using a heating press which comprises different layers of heaters in order to maintain a constant temperature during sublimation. The pile is an assembly made of at least one aramid fabric layer and at least one multilayer structure positioned to each other in an alternate sequence with the thermoplastic layer of the multilayer structure being in physical contact with the aramid fabric layer. The preparation of the pile can be done for example by means of two machines alternatively delivering an aramid fabric layer and one or more multilayer structures. Such machines can also comprise a system for cutting such different layers to fit the size of the heating press. The different layers of the pile are simultaneously heated in a press during a time and at a pressure and temperature sufficient to insure that the thermoplastic resin sublimates, saturates and encapsulates the fibers of the aramid fabric layers without substantially altering the chemical and physical properties of the release layer.

Typically, the pile is pressed at a pressure between 2 and 100 bars and more preferably between 10 and 40 bars. The temperature is typically at least about 30°C beyond the melting point of the thermoplastic layer to enable proper sublimation of the thermoplastic resin. The thermopressing time is preferably between 20 and 60 minutes and depends on the number of different layers of the pile. The impregnated composite structure is cooled, typically to 50°C, while keeping constant the pressure and then is cooled to room temperature under ambient conditions. The final product is eventually retrieved from the pile by peeling off the release layers from the impregnated composite structure.

The stab and ballistic resistant composite structure produced with the method according to the present invention can be used for all protection purposes like for example the fabrication of penetration resistant articles for protecting from the impact of projectiles, knives or other sharp pointed instruments or ballistic resistant articles.

According to a preferred embodiment, the pile under step c) of the method according to the present invention is made of one or more sandwich configurations which are made of at least one aramid fabric layer positioned between two multilayer structures, each of the thermoplastic layer being in physical contact with the aramid fabric layer on each of its side. In such a way it is possible to impregnate the aramid fabric layer on both of its sides thus further improving the overall stab and ballistic resistance of the composite structure finally obtained by means of the method of the present invention.

According to another preferred embodiment of the invention, the at least one thermoplastic layer is colored by adding pigments and/or colorants to the thermoplastic resin. Preferably, the pigments and/or colorants are incorporated into the thermoplastic resin by adding a colored masterbatch, wherein the carrier resin is compatible with the thermoplastic resin of the thermoplastic layer. When used, the amount of colored masterbatch is preferably from 0.5 wt-% to 5 wt-% and more preferably from 1 to 2 wt-% of the total weight of the thermoplastic resin making the thermoplastic layer. Suitable colored masterbatches based on ethylene vinyl acetate (EVA) resins for use in the present invention are commercially available from Elain, Oyonnax, France.

The use of a colored thermoplastic layer enables one to establish a reliable quality control test for assessing the homogeneity of the composite structures obtained by the method of the present invention. It enables one to assess the degree of impregnation of the aramid fabric and any thickness inhomogeneity related thereto.

This is critical in the field of personal protection since inhomogeneity of the composite structure would cause variation of performance of the protective garment or item made thereof. Nowadays, quality control of the final composite structure is quite impossible and certain problems like sublimation anisotropy due to poor heat or pressure distribution, or resin content uniformity due to poor film consistency are not detectable during the manufacture of the composite structure itself.

Furthermore, different colors can be used to differentiate composite structures in function of their thickness and degree of impregnation. A user can rapidly select the structure he needs in function of the specific application.

When colorant, pigments, colored masterbatches and/or others additives are added to the thermoplastic resin on which the at least one thermoplastic layer is based, such compositions may be obtained by combining the polymeric components and non-polymeric ingredients by using any melt-mixing method known in the art.

### EXAMPLES

The following materials were used for preparing the samples according to the present invention:
Aramid fabric layer: poly-p-phenylene terephtalamide yarns of 1100 dtex, commercially available from E.I. du Pont de Nemours and Company, Wilmington, Delaware, USA under the trade name Kevlar^{®} 1K1533, were woven into a plain weave fabric. The weave fabric had 8.5 ends/cm (warp), 8.5 weft/cm (weft) and a specific dry weight of 185 g/m².
Multilayer structure: a two-layer polymeric structure was prepared by extrusion coating
   a) a blue colored ionomer composition comprising
      a1) a copolymer of ethylene and 19 wt-% MAA (methacrylic acid), wherein 45% of the available carboxylic acid moieties are neutralized with sodium cations (product supplied by E. I. du Pont de Nemours and Company, Wilmington, Delaware under the trademark Surlyn^{®})
      a2) 1.1 wt-% of a color masterbatch based on an EVA matrix supplied by Elian, Oyonnax, France with the reference number M197328)
      onto a
   b) a 23 µm polyester film as release layer (product supplied by DuPont Teijin Films under the trademark Mylar^{®}).

The extruder temperatures were set for five extruder zones of the same length, according to a temperature profile of 176°C, 199°C, 221 °C, 240°C and 259°C. The die (63 cm wide) and the connecting pipes were set at 260°C. The chill roll was set at 12°C. The line speed was 30 m/min. One roll of film was produced in a width of 50 cm and 200 m long. The final multilayer structure consisted in a 55 µm layer of the blue colored ionomer extrusion coated onto a 23 µm layer of the polyester as release layer.

Composite structures according to the present invention were prepared through the following process:

Piles were made by manually laying over each other 30 sandwich structures having each the following structure: release layer/thermoplastic layer//aramid fabric layer//thermoplastic layer/release layer. The piles were then treated in a heating press (50 Ton press from SATIM) with the following cycle: a) heating the press at 105°C for 21 minutes; b) inserting the pile; c) thermopressing the pile for 10 minutes at 135°C and 10 bars; d) thermopressing the pile for 20 minutes at 135°C and 20 bars; e) cooling the pile to 50°C for 20 minutes under a pressure of 20 bars, f) retrieving from the pile each impregnated composite structure obtained by the thermopressing process under c) and d); g) cooling to room temperature each impregnated composite structure and h) peeling off the release layers from each impregnated composite structure.

A sample made of fifteen impregnated composite structures was tested for stab resistance. Such sample was kept at room temperature for 24 hours before being tested according to the HOSDB 07 Standard from the United Kingdom Home Office, Police Science and Development Branch (PSDB) HOSDB 07 Standards "PSDB Body Armor standards for UK Police, Part 3, Knife and Spike resistance" using a P1B test blade, 24 joules of attacking energy, a backing material made of foam and a number of 5 drops of the same blade.

The blade penetration measured according to the above Standard for the sample obtained with the method according to the present invention was 15.8 mm. This value is comparable with the blade penetration of the same composite structures obtained with conventional two-steps processes.

The use of a pre-assembled multilayer structure as a combined thermoplastic layer and release layer reduces the complexity of the manufacturing machines and of the overall manufacturing process. Moreover, release layers made of polymers as those described above are easily recyclable and, therefore, their use constitutes an environmentally friendly alternative to the use of silicon paper.

## Claims

1. A method of producing a stab and ballistic resistant composite structure comprising the steps of:
a) providing an aramid fabric layer;
b) providing a multilayer structure comprising at least one thermoplastic layer which is based on a thermoplastic resin and at least one release layer having a melting temperature which is substantially higher than that of the thermoplastic layer;
c) obtaining a pile made of at least one aramid fabric layer and at least one multilayer structure positioned to each other in an alternate sequence, with the thermoplastic layer of the multilayer structure being in physical contact with the aramid fabric layer
d) obtaining the stab and "ballistic resistant composite structure by thermopressing the pile obtained under c) to enable sublimation of the thermoplastic resin and impregnation of the at least one aramid fabric layer with the thermoplastic resin, the thermopressing occurring at a temperature and at a pressure which do not substantially alter the chemical and physical properties of the release layer.
e) removing the at least one release layer from the stab and ballistic resistant composite structure obtained under step d).

2. The method according to claim 1, wherein the melting temperature of the release layer is at least 50°C higher than the melting temperature of the thermoplastic layer.

3. The method according to claim 1 or 2, wherein the pile under step c) is made of one or more sandwich configurations made of at least one aramid fabric layer positioned between two multilayer structures, each of the thermoplastic layer being in physical contact with the aramid fabric layer on each side of the aramid fabric layer.

4. The method according to any preceding claim, wherein the aramid fabric layer is a para-aramid fabric layer.

5. The method According to any preceding claim, wherein the thermoplastic resin is chosen among ionomers, polyethylenes, polyesters, polyamides, polyimides, polycarbonates, polyurethanes, polyether etherketones, phenolic-modified resins and mixtures thereof.

6. The method according to claim 5, wherein the thermoplastic resin is made of one or more ionomers.

7. The method according to any preceding claim, wherein the at least one thermoplastic layer is colored.

8. The method according to any preceding claim, wherein the at least one release layer is chosen among polyesters, polypropylenes, polyethylenes, polyvinyl chlorides, polystyrenes and mixtures thereof.

9. The method according to claim 8, wherein the release layer of the thermoplastic multilayer is a polyester.

## Patentansprüche

1. Verfahren zur Herstellung einer stich- und kugelsicheren Verbundstruktur, umfassend die Schritte des:
a) Bereitstellens einer Aramidtextilstoffschicht;
b) Bereitstellens einer Mehrschichtstruktur, die mindestens eine Thermoplastschicht, die auf einem Thermoplastharz basiert, und mindestens eine Trennschicht umfasst, die eine Schmelztemperatur aufweist, die wesentlich höher liegt als diejenige der Thermoplastschicht;
c) Erhaltens eines Stapels, der aus mindestens einer Aramidtextilstoffschicht und mindestens einer Mehrschichtstruktur hergestellt ist, die in abwechselnder Reihenfolge aufeinander positioniert sind, wobei die Thermoplastschicht der Mehrschichtstruktur sich in physikalischem Kontakt mit der Aramidtextilstoffschicht befindet;
d) Erhaltens der stich- und kugelsicheren Verbundstruktur durch thermisches Komprimieren des unter c) erhaltenen Stapels, um die Sublimierung des Thermoplastharzes und die Imprägnierung der mindestens einen Aramidtextilstoffschicht mit dem Thermoplastharz zu ermöglichen, wobei das thermische Komprimieren bei einer Temperatur und unter einem Druck erfolgt, die die chemischen und physikalischen Eigenschaften der Trennschicht nicht wesentlich ändern,
e) Entfernens der mindestens einen Trennschicht von der stich- und kugelsicheren Verbundstruktur, die in Schritt d) erhalten worden ist.

2. Verfahren nach Anspruch 1, wobei die Schmelztemperatur der Trennschicht mindestens 50°C höher liegt als die Schmelztemperatur der Thermoplastschicht.

3. Verfahren nach Anspruch 1 oder 2, wobei der Stapel in Schritt c) aus einer oder mehreren Sandwich-Konfigurationen gebildet ist, die aus mindestens einer Aramidtextilstoffschicht gebildet sind, die zwischen zwei Mehrschichtstrukturen positioniert ist, wobei jede der Thermoplastschichten sich in physikalischem Kontakt mit der Aramidtextilstoffschicht auf jeder Seite der Aramidtextilstoffschicht befindet.

4. Verfahren nach einem der vorhergehenden Ansprüche, wobei die Aramidtextilstoffschicht eine Para-Aramidtextilstoffschicht ist.

5. Verfahren nach einem der vorhergehenden Ansprüche, wobei das Thermoplastharz unter Ionomeren, Polyethylen, Polyestern, Polyamiden, Polyimiden, Polycarbonaten, Polyurethanen, Polyetheretherketonen, phenolmodifizierten Harzen und Mischungen davon ausgewählt wird.

6. Verfahren nach Anspruch 5, wobei das Thermoplastharz aus einem oder mehreren Ionomeren hergestellt ist.

7. Verfahren nach einem der vorhergehenden Ansprüche, wobei die mindestens eine Thermoplastschicht farbig ist.

8. Verfahren nach einem der vorhergehenden Ansprüche, wobei die mindestens eine Trennschicht unter Polyestern, Polypropylenen, Polyethylenen, Polyvinylchloriden, Polystyrolen und Mischungen davon ausgewählt wird.

9. Verfahren nach Anspruch 8, wobei die Trennschicht der Thermoplastmehrschicht ein Polyester ist.

## Revendications

1. Procédé de production d'une structure composite résistante aux armes blanches et aux balles comprenant les étapes de :
a) fourniture d'une couche de textile d'aramide ;
b) fourniture d'une structure multicouche comprenant au moins une couche thermoplastique à base d'une résine thermoplastique et d'au moins d'une couche de décollement ayant une température de fusion substantiellement supérieure à celle de la couche thermoplastique ;
c) obtention d'une pile constituée d'au moins une couche de textile d'aramide et d'au moins une structure multicouche positionnée l'une par rapport à l'autre en une séquence alternée, avec la couche thermoplastique de la structure multicouche se trouvant en contact physique avec la couche de textile d'aramide ;
d) obtention de la structure composite résistante aux armes blanches et aux balles par thermopressage de la pile obtenue sous c) pour permettre la sublimation de la résine thermoplastique et l'imprégnation de la au moins une couche de textile d'aramide avec la résine thermoplastique, le thermopressage se produisant à une température et à une pression qui n'altèrent pas substantiellement les propriétés chimiques et physiques de la couche de décollement ;
e) retrait de la au moins une couche de décollement de la structure composite résistante aux armes blanches et aux balles obtenue sous l'étape d).

2. Procédé selon la revendication 1, dans lequel la température de fusion de la couche de décollement est au moins de 50°C supérieure à la température de fusion de la couche thermoplastique.

3. Procédé selon la revendication 1 ou 2, dans lequel la pile sous l'étape c) est constituée d'une ou plusieurs configuration(s) de type sandwich fabriquée(s) à partir d'au moins une couche de textile d'aramide positionnée entre deux structures multicouches, chacune des couches thermoplastiques se trouvant en contact physique avec la couche de textile d'aramide sur chaque côté de la couche de textile d'aramide.

4. Procédé selon l'une quelconque des revendications précédentes, dans lequel la couche de textile d'aramide est une couche de textile de para-aramide.

5. Procédé selon l'une quelconque des revendications précédentes, dans lequel la résine thermoplastique est choisie parmi les ionomères, les polyéthylènes, les polyesters, les polyamides, les polyimides, les polycarbonates, les polyuréthanes, les polyéther éther cétones, les résines modifiées par un groupe phénolique et leurs mélanges.

6. Procédé selon la revendication 5, dans lequel la résine thermoplastique est constituée d'un ou plusieurs ionomère(s).

7. Procédé selon l'une quelconque des revendications précédentes, dans lequel la au moins une couche thermoplastique est colorée.

8. Procédé selon l'une quelconque des revendications précédentes, dans lequel la au moins une couche de décollement est choisie parmi les polyesters, les polypropylènes, les polyéthylènes, les poly(chlorures) de vinyle, les polystyrènes et leurs mélanges.

9. Procédé selon la revendication 8, dans lequel la couche de décollement de la multicouche thermoplastique est un polyester.
